Europäisches Patentamt

European Patent Office

Office européen des brevets

(11) Publication number: **0 416 772 A2**

# EUROPEAN PATENT APPLICATION

(21) Application number: 90309045.4

(22) Date of filing: 17.08.90

(51) Int. Cl.⁵: **H01M 4/66**

(30) Priority: 17.08.89 US 395235

(43) Date of publication of application:
13.03.91 Bulletin 91/11

(84) Designated Contracting States:
BE DE DK FR GB

(71) Applicant: **EVEREADY BATTERY COMPANY, INC.**
**Checkerboard Square**
**St. Louis Missouri 63164(US)**

(72) Inventor: **Nardi, John C.**
**3398 Tyler Drive**
**Brunswick, Ohio 44212(US)**

(74) Representative: **Lord, Hilton David et al**
**Marks & Clerk 57-60 Lincoln's Inn Fields**
**London WC2A 3LS(GB)**

(54) **Lead-containing anode current collector for alkaline cells.**

(57) The present invention relates to an alkaline cell that uses a lead-containing conductive anode current collector alloy, such as a copper-zinc-lead alloy current collector, to effectively reduce gassing at the surface of the anode current collector during storage.

EP 0 416 772 A2

# LEAD-CONTAINING ANODE CURRENT COLLECTOR FOR ALKALINE CELLS

The present invention relates to alkaline cells wherein the anode current collector is made of a homogeneous conductive material, such as brass.

Manufacturers of primary alkaline batteries have long recognised the existence of internal gassing that occurs prior to discharging a cell. This phenomenon, commonly referred to as "shelf gassing", can pressurise a cell such that the flat bottom of a cylindrical battery becomes bulged.

One problem created by severely bulged cell bottoms is that the cell, or a combination of cells, may be too long to fit into a battery compartment located within a battery operated device. In severe cases, the pressure buildup may activate the cell's safety vent, and electrolyte expelled through the vent may injure people and/or damage the device.

Several methods have been used to minimise shelf gassing. The best known method relies upon amalgamation of the anode's zinc surface to raise hydrogen evolution overvoltage on the surface of the zinc. As the overvoltage increases, the rate of hydrogen gas generation is restricted.

Alternatively, a variety of organic compounds has been used to coat the surface of the zinc. Representative examples of organic corrosion inhibitors may be found in US-A-3,847,669, or US-A-4,195,120, directed toward the use of organic phosphate esters, or US-A-4,606,984, which discloses a fluorinated molecule that contains an ethoxylated polymer unit.

In another method, the anode's zinc particles are altered by incorporating minor quantities of elements such as indium, lead, thallium and/or gallium into the zinc. This combination of zinc and at least one other element may take the form of a surface deposit or an alloy.

Zinc particles have also been modified by heating in order to reduce the number of grain boundaries. Since the gas generating reactions are thought to occur primarily at the grain boundaries, the quantity of gas generated may be reduced as the number of grain boundaries per particle of zinc is reduced.

While all of these methods have been claimed to be effective at reducing cell gassing, none of the inhibitors have effectively demonstrated the ability to limit gassing to a very low level in a mercury-free cell, or in a cell that contains very little mercury.

In alkaline batteries employing conventional type brass anode current collectors, internal gassing is still a major problem. Common choices for the anode current collector are steel, copper, zinc and brass, the most common being brass, with a typical brass anode current collector having a composition of about 65% to 70% copper and about 30% to 35% zinc. However, in mercury-free alkaline cells or alkaline cells containing a very low amount of mercury, internal gassing is even more of a problem, since it may cause the housing of the battery to expand, i.e., to give rise to a bulged cell bottom, even when using corrosion inhibitors. Furthermore, the use of a conventional brass anode current collector in such cells has been found to aggravate the problem.

As stated, common choices for the anode current collector are steel, copper, zinc and brass, the most common being brass, even though, in mercury-free, or very low mercury, alkaline cells, the use of a conventional brass anode current collector has been found to contribute to the internal gassing of the cell during storage and prior to and after partial and complete discharge.

It has been discovered that gassing at the surface of a conventional brass current collector may be effectively reduced by replacing the conventional brass with an anode current collector made of a conductive alloy containing a discontinuous dispersion of a minimal amount of lead, such as a copper-zinc-lead alloy.

Japanese Patent Application No. 64-59769 discloses an alkaline cell employing a zinc anode and an anode current collector composed of a copper base alloy containing lead and/or tin.

It has now been found that shelf gassing can be prevented by providing an anode current collector containing a dispersion of lead.

In a first aspect, the present invention provides an alkaline cell comprising an alloy anode current collector having lead as a component, characterised in that the amount of lead is at least 500, and preferably at least 900, parts per million based on the weight of the collector, the lead preferably being in a discontinuous dispersion.

In an alternative aspect, the present invention provides an electrochemical cell comprising an anode such as zinc, a cathode, an alkaline electrolyte, and a conductive anode current collector comprising an alloy containing a discontinuous dispersion of lead in which the amount of lead contained in the alloy of the anode current collector is at least 500 parts per million based on the weight of said anode current collector and for copper-zinc-lead alloys, the amount of lead is preferably at least 900 parts per million.

The amount of lead dispersed in the alloy is preferably in the range of from about 1000 parts per million

2

to about 45,000 parts per million, especially in the range of from about 2500 parts per million to about 30,000 parts per million.

The collector is preferably a copper-zinc-lead alloy comprising at least 50 weight percent copper with the balance substantially zinc, preferably from 60 to 75 weight percent copper and 40 to 25 weight percent zinc, with a minor amount of lead.

The lead may be in the form of a homogeneous dispersion of lead throughout the alloy, and this may be the preferable form. However, provided that the amount near the surface of the collector meets with the requirements of the invention, the internal amounts are not critical or important.

The preferred cells comprise a manganese dioxide cathode and a zinc anode, especially wherein the alkaline electrolyte is potassium hydroxide.

The invention is also useful where the anode contains no mercury.

The present invention also provides a cell as defined above, further characterised in that the collector is coated with a discontinuous layer of lead, preferably in the form of a discontinuous dispersion. The amount of lead contained in the layer on the surface of the anode current collector is preferably at least 150 parts per million, particularly in an amount of from about 500 parts per million to about 45,000 parts per million, especially from about 1500 parts per million to about 30,000 parts per million, based on the weight of a 0.1 μm thick portion of the layer on the surface of the substrate.

The thickness of the layer of the lead-containing coating on the surface of the substrate may vary greatly, without any particular limits, provided that the lead is dispersed on the surface of the collector. However, a suitable range is from about 0.1 μm thick to about 100 μm thick.

The collector of the invention is usable in alkaline cells in general, to reduce gassing, and the present invention provides such a collector. Below certain levels, the lead has little or no effect, and this also tends to be true above certain levels.

The cells of the invention demonstrate little or effectively no internal gassing during storage, even when mercury-free, or substantially mercury-free.

The cell is advantageously a mercury-free alkaline electrochemical cell with a zinc anode and a copper-zinc-lead alloy anode current collector. The alloy of the collector advantageously comprises cadmium and/or indium to further reduce internal gassing during storage. Cadmium and/or indium may also be provided in any layer on the collector and in similar quantities to those appropriate to the alloy.

Thus, the present invention provides an alkaline cell employing an anode, such as zinc, wherein the anode current collector used with the anode is made of a homogeneous conductive material containing a discontinuous dispersion of lead to effectively reduce gassing in the cell during storage.

The term 'discontinuous' dispersion means that the lead is dispersed in the alloy and any lead contained on the surface of the anode current collector does not form a continuous surface layer.

Cylindrical alkaline cells are generally manufactured with a zinc anode, a manganese dioxide cathode and an alkaline electrolyte. The manganese dioxide is generally pressed up against the inner wall of the cylindrical container and a suitable separator material is fitted in the cavity. A mixture comprising zinc is placed in the interior of the separator and an anode current collector placed into the zinc mixture. The anode may, for example, be pressed powder, or zinc in a powdered form distributed throughout an electrolyte gel.

Suitable choices for the anode current collector are steel, copper, zinc and brass, the most common being brass with a composition as identified above.

The minimum amount of lead dispersed in the copper-zinc-lead alloy collector should be preferably at least 900 parts per million based on the weight of the alloy of the current collector. Preferably, the dispersed lead in a current collector made of an alloy should be from 1000 parts per million to 45,000 parts per million, and more preferably from 2500 parts per million to 30,000 parts per million based on the weight of the alloy of the anode current collector. For alloys other than copper-zinc-lead alloys, the effective amount of lead dispersed in the alloy may be 500 parts per million based on the weight of the alloy.

The lead may be homogeneously dispersed throughout the anode current collector, or a higher or lower concentration of lead near the outer portion of the anode current collector may be provided, so long as the lead contained at the outer portion of the anode current collector is within the range specified above.

In a copper-zinc-lead alloy current collector, the copper is required to provide adequate conductivity for the current collector and the zinc to be compatible with the zinc anode. Preferably, the copper should form at least 50 weight percent of the copper-zinc-lead alloy, the remainder being substantially zinc and, in a minor amount, lead. More preferably, the alloy should have a composition of copper from 60 to 75 weight percent, zinc from 40 to 25 weight percent, and a minor amount of lead. A preferred copper-zinc-lead alloy for use as the anode current collector is copper alloy C33000, containing from 65 to 68 weight percent copper, 0.25 to 0.7 weight percent lead, 0.07 weight percent iron and the remainder zinc.

In addition to a copper-zinc-lead alloy, any other conductive material compatible with the electrochemical system of the cell may be used as the alloy material of the anode current collector. Thus, the anode current collector may be a conductive alloy composed of steel, copper, zinc or brass containing a dispersion of lead throughout the alloy.

It has also been discovered that the gassing may be further reduced by adding a minor amount of cadmium to the alloy of the anode current collector. The cadmium may be dispersed along with the lead throughout the anode current collector. The cadmium may be added in an amount of at least 1000 parts per million based on the weight of the anode current collector. Preferably, the amount of dispersed cadmium is in the range of from about 1500 parts per million to about 2000 parts per million.

In addition to cadmium, indium may also be added to the anode current collector to further reduce gassing in the cell. The indium may be dispersed along with the lead and/or cadmium throughout the anode current collector. The indium may be added in an amount of at least 40 parts per million based on the weight of the anode current collector. Preferably, the dispersed indium in the range of from about 100 parts per million to about 500 parts per million based on the weight of the anode current collector.

The effects, features and advantages of the present invention will be demonstrated in the following Examples, which are for illustration only and should not be interpreted to impose any limitations on the invention.

## Example 1

"D" size cells were produced using an anode comprised of granular zinc, 0.1 percent mercury and a gelling agent; a cathode of manganese dioxide, carbon and a binder; and an electrolyte comprised of potassium hydroxide. The components of each cell were placed in a nickel plated steel container which served as both the container and as the cathodic current collector. The variable in each cell was the composition of the anode current collector which was made of a copper-zinc-lead alloy. The cells were stored at 71°C for eight weeks and, at weekly intervals, the net bulge in each cell was measured. The data for an average of three cells per Sample Lot were obtained and are shown in Table 1.

Table 1

| Cells Stored at 71°C | | | | | |
|---|---|---|---|---|---|
| *Sample Lot 1 | | **Sample Lot 2 | | ***Sample Lot 3 | |
| Time | Bulge | Time | Bulge | Time | Bulge |
| (weeks) | (inch/mm) | (weeks) | (inch/mm) | (weeks) | (inch/mm) |
| 1 | 0.012/0.30 | 1 | 0.009/0.23 | 1 | - / - |
| 2 | 0.015/0.38 | 2 | 0.008/0.20 | 2 | 0.007/0.18 |
| 4 | 0.018/0.46 | 4 | 0.007/0.18 | 4 | 0.005/0.13 |
| 5 | 0.025/0.64 | 5 | 0.008/0.20 | 5 | 0.005/0.13 |
| 6 | 0.026/0.66 | 6 | 0.007/0.18 | 6 | 0.006/0.15 |
| 7 | 0.028/0.71 | 7 | 0.008/0.20 | 7 | 0.007/0.18 |
| 8 | 0.029/0.74 | 8 | 0.007/0.18 | 8 | 0.005/0.13 |

\* cells had an anode current collector comprising 68.5 to 71.5 weight percent copper, balance substantially zinc, and 200 parts per million lead based on the weight of the current collector.

\*\* cells did not have a current collector.

\*\*\* cells had an anode current collector comprising 65 to 68 weight percent copper, balance substantially zinc, and 2500 parts per million lead on the weight of the current collector.

The data in Table 1 show that the cells of Sample Lot 2, with no current collector, had very little bulge while the cells of Sample Lot 1 having a conventional brass current collector, containing only 200 parts per million lead, resulted in a four-fold increase in the amount of bulge after eight weeks. This increase in bulge occurred even though the cell contained 0.1 percent mercury based on the weight of the zinc in the anode.

The cells with the current collector containing 2500 parts per million lead (Sample Lot 3) resulted in an average bulge comparable to the average bulge in the cells without a current collector (Sample Lot 2). The data show that by increasing the quantity of lead in the alloy of the anode current collector from 200 parts per million (Sample Lot 1) to 2500 parts per million (Sample Lot 3), the gassing in the cell may be substantially reduced, to an amount similar to, or even less than cells with no current collector.

Example 2

"D" size cells were produced as in Example 1, except that the zinc anode contained no mercury. Again, the variable in each cell was the composition of the copper-zinc-lead alloy anode current collector. The cells were stored at 71° C for eight weeks and, at weekly intervals, the net bulge in each cell was measured. The data for an average of three cells per Sample Lot were obtained and are shown in Table 2.

Table 2

| Cells Stored at 71° C | | | |
|---|---|---|---|
| *Sample Lot 1 | | **Sample Lot 2 | |
| Time | Bulge | Time | Bulge |
| (weeks) | (inch/mm) | (weeks) | (inch/mm) |
| 1 | 0.054/1.37 | 1 | 0.010/0.25 |
| 2 | 0.052/1.32 | 2 | 0.019/0.48 |
| 4 | 0.050/1.27 | 4 | 0.020/0.51 |
| 5 | 0.055/1.40 | 5 | 0.022/0.56 |
| 6 | 0.055/1.40 | 6 | 0.028/0.71 |
| 7 | 0.056/1.42 | 7 | 0.027/0.69 |
| 8 | 0.057/1.45 | 8 | 0.027/0.69 |

* cells had an anode current collector comprising 68.5 to 71.5 weight percent copper, balance substantially zinc, and 200 parts per million lead based on the weight of the current collector.
** cells had an anode current collector comprising 65 to 68 weight percent copper, balance substantially zinc, and 2500 parts per million lead on the weight of the current collector.

The data in Table 2 show that in mercury-free cells, the cells containing a copper-zinc-lead alloy current collector with only 200 parts per million lead (Sample Lot 1) bulged an average of approximately 0.057 inch (1.45 mm) after storage for eight weeks at 71° C. When the lead content in the copper-zinc-lead alloy was increased to 2500 parts per million (Sample Lot 2), the average bulge in the cells after eight weeks was only 0.027 inch (0.69 mm). Thus, in mercury-free alkaline cells, the gassing caused by the current collector may be decreased by increasing the quantity of lead in the current collector in accordance with the present invention.

Example 3

"D" size cells were produced as in Example 1, except that the zinc anode contained no mercury. Again, the variable in each cell was the composition of the copper-zinc-lead alloy anode current collector. The cells were stored at 71° C and, at weekly intervals, the net bulge in each cell was measured. The data for an average of three cells per Sample Lot were obtained and are shown in Table 3.

Table 3

| Cells Stored at 71° C | | | | | |
|---|---|---|---|---|---|
| *Sample Lot 1 | | **Sample Lot 2 | | ***Sample Lot 3 | |
| Time | Bulge | Time | Bulge | Time | Bulge |
| (weeks) | (inch/mm) | (weeks) | (inch/mm) | (weeks) | (inch/mm) |
| 1 | 0.042/1.07 | 1 | 0.012/0.30 | 1 | 0.005/0.13 |
| 2 | 0.041/1.04 | 2 | 0.014/0.36 | 2 | 0.004/0.10 |
| 3 | 0.038/0.97 | 3 | 0.020/0.51 | 3 | 0.003/0.08 |
| 4 | 0.040/1.02 | 4 | 0.021/0.53 | 4 | 0.003/0.08 |
| 5 | 0.035/0.89 | 5 | 0.020/0.51 | 5 | 0.005/0.13 |
| 6 | 0.036/0.91 | 6 | 0.017/0.43 | 6 | 0.005/0.13 |
| 7 | 0.040/1.02 | 7 | 0.018/0.46 | 7 | 0.004/0.10 |

* cells had an anode current collector comprising 68.5 to 71.5 weight percent copper, balance substantially zinc, and 200 parts per million of lead based on the weight of the current collector.
** cells had an anode current collector comprising 65 to 68 weight percent copper, balance substantially zinc, and 2500 parts per million lead based on the weight of the current collector.
*** cells had an anode current collector comprising 60 to 63 weight percent copper, balance substantially zinc, and 25000 parts per million lead based on the weight of the current collector.

The data in Table 3 show that in mercury-free alkaline cells, the average bulge in the cells containing only 200 parts per million lead (Sample Lot 1) in the anode current collector had an average bulge of approximately 0.040 inch (1.02 mm) after storage at 71° C for seven weeks, while similar cells having 2500 parts per million lead (Sample Lot 2) in the anode current collector had an average bulge of only 0.018 inch (0.46 mm). In the cells containing 25,000 parts per million lead in the anode current collector (Sample Lot 3), the average bulge in the cell was only 0.004 inch (0.10 mm) after seven weeks. These data show that in mercury-free cells, increasing the lead level in the anode current collector has a direct and significant impact on reducing the quantity of gas evolved as determined by measuring the bulge in the bottom of the cell.

Example 4

"D" size cells were produced as in Example 1, except that the zinc anode in each cell contained no mercury but did contain a small amount of lead, with Sample Lot 2 containing a larger amount of lead in the zinc anode. In addition, the composition of the copper-zinc-lead alloy anode current collector was different for each cell. The cells were stored for eight weeks at 71° C and, at weekly intervals, the average net bulge for three cells in each Sample Lot was measured. The data for an average of three cells per Sample Lot were obtained and are shown in Table 4.

Table 4

| Cells Stored at 71° C | | | | | |
|---|---|---|---|---|---|
| *Sample Lot 1 | | **Sample Lot 2 | | ***Sample Lot 3 | |
| Time | Bulge | Time | Bulge | Time | Bulge |
| (weeks) | (inch/mm) | (weeks) | (inch/mm) | (weeks) | (inch/mm) |
| 1 | 0.037/0.94 | 1 | 0.047/1.19 | 1 | 0.051/1.30 |
| 2 | 0.037/0.94 | 2 | 0.051/1.30 | 2 | 0.053/1.35 |
| 3 | 0.037/0.94 | 3 | 0.048/1.22 | 3 | 0.053/1.35 |
| 4 | 0.037/0.94 | 4 | 0.051/1.30 | 4 | 0.052/1.32 |
| 5 | 0.038/0.97 | 5 | 0.051/1.30 | 5 | 0.052/1.32 |
| 6 | 0.037/0.94 | 6 | 0.050/1.30 | 6 | 0.050/1.30 |
| 7 | 0.037/0.94 | 7 | 0.047/1.19 | 7 | 0.048/1.22 |
| 8 | 0.036/0.91 | 8 | 0.046/1.17 | 8 | 0.048/1.22 |

\* cells had an anode containing zinc with 0.05 weight percent lead and an anode current collector comprising 65 to 68 weight percent copper, balance substantially zinc and 5000 parts per million lead based on the weight of the curr nt collector.
\*\* cells had an anode containing zinc with 0.12 weight percent lead and an anode current collector comprising 68.5 to 71.5 weight percent copper, balance substantially zinc and 200 parts per million lead based on the weight of the urrent collector.
\*\*\* cells had an anode containing zinc with 0.05 weight percent lead and an anode current collector comprising 68.5 to 71.5 weight percent copper, balance substantially zinc and 200 parts per million lead based on the weight of the current collector.

The data in Table 4 show that after eight weeks of storage at 71° C, the cells with the high lead content in the anode (Sample Lot 2) had approximately the same average bulge as the cells without the additional lead in the anode (Sample Lot 3). Incorporating the lead into the anode current collector (Sample Lot 1) instead of the zinc anode (Sample Lot 2) resulted in a decrease of approximately 22% in the average bulge of the cells with the conventional zinc anode. The data in Table 4 show that the incorporation of lead into the anode current collector is more effective at controlling shelf gassing than is the incorporation of additional lead into the zinc anode.

Example 5

"D" size cells were produced as in Example 1 except that the zinc anode contained no mercury. Again, the variable in each cell was the composition of the zinc alloy anode current collector. The cells were stored at 71° C and, at weekly intervals, the average net bulge for three cells in each Sample Lot was measured. The data for an average of three cells per Sample Lot were obtained and are shown in Table 5.

Table 5

| Cells Stored at 71 ° C | | | | | | | |
| *Sample Lot 1 | | **Sample Lot 2 | | ***Sample Lot 3 | | ****Sample Lot 4 | |
| Time | Bulge | Time | Bulge | Time | Bulge | Time | Bulge |
| (wks) | (inch/mm) | (wks) | (inch/mm) | (wks) | (inch/mm) | (wks) | (inch |
| 1 | 0.041/1.04 | 1 | 0.020/0.51 | 1 | 0.026/0.66 | 1 | 0.016 |
| 2 | 0.046/1.17 | 2 | 0.022/0.56 | 2 | 0.028/0.71 | 2 | 0.016 |
| 3 | 0.045/1.14 | 3 | 0.021/0.53 | 3 | 0.026/0.66 | 3 | 0.015 |
| 4 | 0.043/1.09 | 4 | 0.021/0.53 | 4 | 0.024/0.61 | 4 | 0.015 |
| 5 | 0.041/1.04 | 5 | 0.021/0.53 | 5 | 0.024/0.61 | 5 | 0.014 |
| 6 | 0.042/1.07 | 6 | 0.021/0.53 | 6 | 0.024/0.61 | 6 | 0.015 |
| 7 | 0.040/1.01 | 7 | 0.019/0.48 | 7 | 0.021/0.53 | 7 | 0.013 |
| 8 | 0.041/1.04 | 8 | 0.019/0.48 | 8 | 0.021/0.53 | 8 | 0.015 |

* cells had an anode current collector comprising a zinc anode current collector.
** cells had an anode current collector comprising a zinc anode current collector with 1400 parts per million cadmium based on the weight of the current collector dispersed throughout the current collector.
*** cells had an anode current collector comprising a zinc anode current collector with 700 parts per million lead based on the weight of the current collector dispersed throughout the current collector.
**** cells had an anode current collector comprising a zinc anode current collector with 1400 parts per million cadmium based on the weight of the current collector and 700 parts per million lead based on the weight of the current ollector dispersed throughout the current collector.

The data in Table 5 show that in the mercury-free alkaline cells, the average bulge in the cells (Sample Lot 4) containing 1400 parts per million cadmium and 700 parts per million lead in the current collectors was less after eight weeks storage than the average bulge in the cells containing no lead and no cadmium in the current collectors (Sample Lot 1), the cells containing only cadmium in the current collectors (Sample Lot 2), and the cells containing only lead in the current collectors (Sample Lot 3). Thus the addition of cadmium to the lead-containing anode current collectors of this invention can further reduce the bulge in mercury-free alkaline cells.

Example 6

"D" size cells were produced as in Example 1 except that the zinc anode contained no mercury. Again, the variable in each cell was the composition of the zinc alloy anode current collector. The cells were stored at 71 ° C and, at weekly intervals, the net bulge in each cell was measured. The data for an average of three cells per Sample Lot were obtained and are shown in Table 6.

Table 6

| Cells Stored at 71 °C | | | | | | | |
|---|---|---|---|---|---|---|---|
| *Sample Lot 1 | | **Sample Lot 2 | | ***Sample Lot 3 | | ****Sample Lot 4 | |
| Time | Bulge | Time | Bulge | Time | Bulge | Time | Bulge |
| (wks) | (inch/mm) | (wks) | (inch/mm) | (wks) | (inch/mm) | (wks) | (inch |
| 1 | 0.026/0.66 | 1 | 0.005/0.13 | 1 | 0.005/0.13 | 1 | 0.011 |
| 2 | 0.028/0.71 | 2 | 0.004/0.10 | 2 | 0.004/0.10 | 2 | 0.011 |
| 3 | 0.026/0.66 | 3 | 0.004/0.10 | 3 | 0.004/0.10 | 3 | 0.009 |
| 4 | 0.024/0.61 | 4 | 0.004/0.10 | 4 | 0.003/0.08 | 4 | 0.009 |
| 5 | 0.024/0.61 | 5 | 0.003/0.08 | 5 | 0.004/0.13 | 5 | 0.009 |
| 6 | 0.024/0.61 | 6 | 0.004/0.10 | 6 | 0.004/0.13 | 6 | 0.009 |
| 7 | 0.021/0.53 | 7 | 0.003/0.08 | 7 | 0.002/0.05 | 7 | 0.007 |
| 8 | 0.021/0.53 | 8 | 0.004/0.10 | 8 | 0.003/0.08 | 8 | 0.008 |

\* cells had an anode current collector comprising zinc with 700 parts per million lead based on the weight of the current collector dispersed throughout the current collector.

\*\* cells had an anode current collector comprising zinc with 700 parts per million lead based on the weight of the current collector with 400 parts per million indium based on the weight of the current collector dispersed throughou the current collector.

\*\*\* cells had an anode current collector comprising zinc with 700 parts per million lead based on the weight of the current collector and 100 parts per million indium based on the weight of the current collector dispersed throughou the current collector.

\*\*\*\* cells had an anode current collector comprising zinc with 700 parts per million lead based on the weight of the current collector and 40 parts per million indium based on the weight of the current collector dispersed throughou the current collector.

The data in Table 6 show that, in mercury-free alkaline cells, the average bulge in the cells (Sample Lots 2, 3 and 4) containing indium and lead in the current collectors was smaller than the average bulge in the cells containing only lead (Sample Lot 1) in the current collectors. Thus the addition of indium to the lead-containing anode current collector of this invention can further reduce the bulge in mercury-free alkaline cells.

## Claims

1. An alkaline cell comprising an alloy anode current collector having lead as a component, characterised in that the amount of lead is at least 500 parts per million based on the weight of the collector.

2. A cell according to claim 1, wherein the lead is in a discontinuous dispersion.

3. A cell according to claim 1 or 2, wherein the amount of lead dispersed in the alloy is in the range of from about 1000 parts per million to about 45,000 parts per million.

4. A cell according to claim 3, wherein the amount of lead dispersed in the alloy is in the range of from about 2500 parts per million to about 30,000 parts per million.

5. A cell according to any preceding claim, wherein the lead dispersed in the alloy is at least 900 parts per million based on the weight of the alloy.

6. A cell according to any preceding claim, wherein the collector is a copper-zinc-lead alloy comprising at least 50 weight percent copper with the balance substantially zinc, preferably from 60 to 75 weight percent copper and 40 to 25 weight percent zinc, with a minor amount of lead.

7. A cell according to any preceding claim, wherein the lead is in the form of a homogeneous dispersion of lead throughout the alloy.

8. A cell according to any preceding claim, wherein the collector contains a dispersion of cadmium, preferably in an amount of at least 1000 parts per million based on the weight of said anode current collector.

9. A cell according to claim 8, wherein the amount of cadmium is in the range of from about 1500 parts per million to about 2000 parts per million.

9

10. A cell according to any preceding claim, wherein the collector contains a dispersion of indium, preferably in an amount of at least 40 parts per million based on the weight of said anode current collector.

11. A cell according to claim 10, wherein the amount of indium is in the range of from about 100 parts per million to about 500 parts per million.

12. A cell according to any preceding claim, wherein the cathode is manganese dioxide and said anode is zinc.

13. A cell according to any preceding claim, wherein the alkaline electrolyte is potassium hydroxide.

14. A cell according to any preceding claim, wherein the anode contains no mercury.

15. A cell according to any preceding claim, further characterised in that the collector is coated with a discontinuous layer of lead, preferably in the form of a discontinuous dispersion, the amount of lead contained in the layer on the surface of the anode current collector being preferably at least 150 parts per million, partioularly in an amount of from about 500 parts per million to about 45,000 parts per million, especially from about 1500 parts per million to about 30,000 parts per million, based on the weight of a 0.1 $\mu$m thick portion of the layer on the surface of the substrate, the thickness of the layer of lead prferably being in the range of from about 0.1 $\mu$m thick to about 100 $\mu$m thick.

16. An electrochemical cell comprising an anode, a cathode, an alkaline electrolyte, and a conductive anode current collector comprising an alloy containing a discontinuous dispersion of lead in which the amount of lead contained in the alloy of the anode current collector is at least 500 parts per million based on the weight of said anode current collector,
said cell optionally further comprising any one or more suitable features as defined in any preceding claim, in any suitable combination.

17. An alloy anode current collector having lead as a component,
said collector optionally further comprising any one or more suitable features as defined in any preceding claim, in any suitable combination.